# EUROPÄISCHE PATENTSCHRIFT

(11) **EP 2 254 741 B1**
(45) Veröffentlichungstag und Bekanntmachung des Hinweises auf die Patenterteilung: **10.04.2013**
(21) Anmeldenummer: 09712634.6
(22) Anmeldetag: 19.02.2009
(51) Int. Cl.: B29C 44/14, B60R 13/02, B29C 45/14

(54) **AUSSTATTUNGSTEIL, INSBESONDERE FÜR KRAFTFAHRZEUG, UND HERSTELLVERFAHREN**
FITTING PART, IN PARTICULAR FOR A MOTOR VEHICLE, AND PRODUCTION PROCESS
PIÈCE D'HABILLAGE, EN PARTICULIER POUR VÉHICULE AUTOMOBILE ET PROCÉDÉ POUR SA FABRICATION

(30) Priorität: 22.02.2008 DE 102008010594
(43) Veröffentlichungstag der Anmeldung: 01.12.2010
(73) Patentinhaber: Johnson Controls Interiors GmbH & Co. KG, 47929 Grefrath (DE)
(72) Erfinder: WOLFF, Martin, 45529 Hattingen (DE); KUCKERTZ, Martin, D-41468 Neuss (DE); KASUM, Alfred, 41469 Neuss (DE); WELLEN, Heinz-Dieter, 47804 Krefeld (DE); DIEK, Hans-Jörg, 52428 Jülich-Güsten (DE); ERPRATH, Thomas, 47638 Straelen (DE)
(74) Vertreter: Wolff, Felix
(86) Internationale Anmeldenummer: PCT/EP2009/001195
(87) Internationale Veröffentlichungsnummer: WO 2009/103536

(56) Entgegenhaltungen:
- EP-A- 0 320 925
- US-A1- 2004 183 229
- US-A1- 2005 064 141
- US-B1- 6 454 984

## Beschreibung

Die Erfindung betrifft ein Ausstattungsteil, insbesondere für ein Kraftfahrzeug, sowie ein Verfahren zu seiner Herstellung.

Fahrzeuginnenausstattungsteile aus einem Kunststoffmaterial, die eine genarbte Oberflächenstruktur aufweisen sowie deren Herstellung sind aus dem Stand der Technik, beispielsweise der DE 10 2005 005 576, der DE 103 56 665, der DE 10 2004 059 773 sowie der DE 197 20 474 bekannt. Die dort beschriebenen Fahrzeuginnenausstattungsteile haben jedoch den Nachteil, dass das Herstellungsverfahren vergleichsweise aufwändig, die Trägerschicht vergleichsweise dick, eine komplexe Struktur nicht realisierbar und/oder die Narbung aufwändig oder nicht ansprechend ist.

EP320925 A1 beschreibt ein Verfahren zur Herstellung eines genarbten Fahrzeuginnenausstattungsteils wobei eine glatte Folie in ein mit einer Oberflächenstruktur versehenes Werkzeug eingelegt wird und mit einem schäumenden Trägermaterial hinterspritzt wird das anschließend aushärtet.

Der Erfindung liegt die Aufgabe zugrunde, ein optisch ansprechendes Ausstattungsteil mit komplexer Geometrie und/oder geringem Gewicht herzustellen, das die Nachteile des Standes der Technik nicht aufweist.

Gelöst wird die Aufgabe mit einem Verfahren zur Herstellung eines genarbten Fahrzeuginnenausstattungsteils, bei dem eine vorgenarbte Folie in ein mit einer Oberflächenstruktur versehenes Werkzeug eingelegt und mit einem schäumenden Trägermaterial hinterspritzt wird das anschließend aushärtet.

Die vorliegende Erfindung betrifft ein Verfahren, bei dem eine an sich vorgenarbte Folie in einem mit einer Oberflächenstruktur versehenem Spritzgießwerkzeug mit einem geschäumten Trägermaterial hinterspritzt wird, wodurch sich die Oberflächenstruktur als Narbung auf die Folie überträgt. Dabei bildet sich vorzugsweise ein geschlossenzelliger Raum mit einer kompakten Haut. Aufgrund der geringeren Wärmeleitfähigkeit des geschäumten Trägermaterials bleibt das Ausstattungsteil im Werkzeug länger warm, wodurch sich die Oberflächenstruktur des Werkzeugs besser auf die Oberfläche der Folie überträgt und die Haftung zwischen Folie und Trägermaterial verbessert wird.

Ein weiterer oder bevorzugter Gegenstand der vorliegenden Erfindung ist ein Verfahren, bei dem die Folie mit einer feinen Narbenstruktur vorstrukturiert ist und beim Hinterspritzen mit einem Trägermaterial zusätzlich mit einer gröberen Narbenstruktur versehen wird.

Erfindungsgemäß wird bereits beispielsweise beim Tiefziehprozess eine feine Narbe vom Tiefziehwerkzeug auf die Folie übertragen. Die so vorstrukturierte Folie wird in das mit einer weniger feinen Oberfläche versehenen Spritzgießwerkzeug eingelegt und mit einer Kunststoffschmelze hinterspritzt, die vorzugsweise, aber nicht zwingend physikalisch aufgeschäumt ist. Alternativ ist denkbar, dass das Trägermaterial nicht oder chemisch aufgeschäumt werden kann. Überraschenderweise wird die feine Narbung von der weniger feinen nicht aufgehoben, so dass ein Bauteil mit besonders ansprechender Optik entsteht, z.B. eine mattierte Lederstruktur.

Die folgenden Ausführungen gelten für beide erfindungsgemäßen Verfahren gleichermaßen.

Vorzugsweise wird die Folie vor dem Einlegen dreidimensional geformt.

Gemäß einer weiteren bevorzugten Ausführungsform der vorliegenden Erfindung, wird das Trägermaterial als Schmelze in das Werkzeug eingeführt. Der Anguss der Schmelze erfolgt dabei vorzugsweise über Heißkanäle, welche beispielsweise im Bereich der Rippen oder anderer auskragender folienfreier Bereiche des Ausstattungsteils in das Spritzgießwerkzeug einmünden. Der Einspritzpunkt liegt vorzugsweise am folienfernsten Punkt der Rippe oder Folie.

Vorzugsweise wird die Schmelze mit einem Treibfluid, vorzugsweise ein Treibgas, ganz besonders bevorzugt CO₂ und/oder N₂, beladen. Durch die Verwendung eines Treibfluids ist die Schaumstruktur gleichmäßiger verteilt als beim chemischen Schäumprozess, wodurch eine negative Beeinträchtigung der Optik, insbesondere bei sehr dünnen Folien vermieden wird. Ferner werden die mechanischen Eigenschaften des Ausstattungsteils vergleichmäßigt. Durch die gute Fließfähigkeit der gasbeladenen Schmelze lassen sich besonders dünne Strukturen ausbilden. Vorzugsweis erfolgt das Beladen der Schmelze mit dem Treibgas unter Druck, beispielsweise in einer Extruderschnecke, die eine entsprechende Druckkammer aufweist. Das Treibgas wird vorzugsweise in die Schmelze eingebracht, beispielsweise injiziert, und dann beispielsweise in einer Extruderschnecke zu einer Einphasenmischung/-lösung verarbeitet. In dem Werkzeug, beispielsweise einem Spritzwerkzeug, wird dann das beladene Trägermaterial vorzugsweise entspannt. Dabei findet vorzugsweise eine Nukleierung von Gaszellen mit anschließendem Wachstum statt.

Durch das Schäumen lässt sich eine Gewichtsreduzierung der Trägerschicht erreichen, wobei die Höhe der Reduzierung über das Verhälnis von Trägermaterialmasse zu Treibgas gesteuert werden kann.

Ein weiterer Gegenstand der vorliegenden Erfindung ist ein Fahrzeuginnenausstattungsteil erhältlich gemäß einem der voranstehenden Ansprüche.

Noch ein weiterer Gegenstand der vorliegenden Erfindung ist ein Fahrzeuginnenausstattungsteil, mit einer genarbten Folie, die an ihrer Rückseite eine physikalisch geschäumte Trägerschicht aufweist.

Die Ausführungen zu den erfindungsgemäßen Verfahren gelten für die erfindungsgemäßen Fahrzeuginnenausstattungsteile gleichermaßen und umgekehrt.

Die folgenden Ausführungen gelten für beide erfindungsgemäßen Fahrzeuginnenausstattungsteile gleichermaßen.

Die Folie weist vorzugsweise eine Dicke von weniger als 0,5mm, insbesondere weniger als 0,4mm auf und besteht mit Vorteil aus mehreren Schichten unterschiedlicher PP-Copolymere. Sichtseitig, d.h. auf der dem Fahrzeuginnenraum zugewandten Seite, kann die Folie mit einem PUR-Lack versehen sein. Es ist möglich, dass die Folie vor dem Einlegen in das Werkzeug dreidimensional vorgeformt ist.

Vorzugsweise beträgt die Dicke der Trägerschicht an ihrer dicksten Stelle < 2,3 mm, besonders bevorzugt < 1 mm.

Vorzugsweise besteht das Trägermaterial aus PP-Copolymer, dessen Schmelze in der Spritzgießmaschine mit einem Treibfluid beladen und im Spritzgießwerkzeug aufschäumt wird.

## Patentansprüche

1. Verfahren zur Herstellung eines genarbten Fahrzeuginnenausstattungsteils, **dadurch gekennzeichnet, dass** eine Folie mit einer feinen Narbenstruktur vorstrukturiert ist und beim Hinterspritzen mit einem Trägermaterial zusätzlich mit einer gröberen Narbenstruktur versehen wird, idem die vorgenarbte Folie in ein mit einer Oberflächenstruktur versehenes Werkzeug eingelegt und mit einem schäumenden Trägermaterial hinterspritzt wird, das anschließend aushärtet.

2. Verfahren nach einem der voranstehenden Ansprüche, **dadurch gekennzeichnet, dass** die Folie vor dem Einlegen dreidimensional geformt wird.

3. Verfahren nach einem der voranstehenden Ansprüche, **dadurch gekennzeichnet, dass** das Trägermaterial als Schmelze in das Werkzeug eingeführt wird.

4. Verfahren nach Anspruch 3, **dadurch gekennzeichnet, dass** die Schmelze mit einem Treibfluid, vorzugsweise ein Treibgas, ganz besonders bevorzugt CO₂ und/oder N₂, beladen wird.

5. Verfahren nach Anspruch 4, **dadurch gekennzeichnet, dass** das Beladen unter Druck erfolgt.

6. Verfahren nach Anspruch 4 oder 5, **dadurch gekennzeichnet, dass** sich das Trägermaterial im Werkzeug entspannt.

7. Verfahren nach einem der voranstehenden Ansprüche, **dadurch gekennzeichnet, dass** als Einspritzpunkt ein von der Folie möglichst weit entfernter Punkt gewählt wird.

## Claims

1. Process for producing a grained vehicle interior fitting part, **characterized in that** a film is pre-structured with a fine grain structure and is additionally provided with a coarser grain structure during the film insert molding with a support material by virtue of the pre-grained film being placed into a die provided with a surface structure and being film insert molded with a foaming support material which subsequently hardens.

2. Process according to the preceding claim, **characterized in that** the film is three-dimensionally shaped before being placed in.

3. Process according to one of the preceding claims, **characterized in that** the support material is introduced into the die as a melt.

4. Process according to Claim 3, **characterized in that** the melt is charged with a propellant fluid, preferably a propellant gas, very particularly preferably CO₂ and/or N₂.

5. Process according to Claim 4, **characterized in that** the charging takes place under pressure.

6. Process according to Claim 4 or 5, **characterized in that** the support material expands in the die.

7. Process according to one of the preceding claims, **characterized in that** a point as remote from the film as possible is selected as an injection point.

## Revendications

1. Procédé de fabrication d'une pièce d'habillage grainée pour un intérieur de véhicule automobile, **caractérisé en ce que** l'on pré-structure une feuille avec une structure grainée fine et on la dote en plus d'une structure grainée plus grosse lors de la pulvérisation arrière avec un matériau de support, en déposant la feuille pré-grainée dans un outil doté d'une structure de surface et en pulvérisant sur sa face arrière un matériau de support moussant, qui durcit ensuite.

2. Procédé selon la revendication précédente, **caractérisé en ce que** l'on façonne la feuille en trois dimensions avant de la déposer.

3. Procédé selon l'une quelconque des revendications précédentes, **caractérisé en ce que** l'on introduit le matériau de support sous forme de bain fondu dans l'outil.

4. Procédé selon la revendication 3, **caractérisé en ce que** l'on charge le bain fondu avec un fluide propulseur, de préférence un gaz propulseur, de préférence tout particulièrement du CO₂ et/ou du N₂.

5. Procédé selon la revendication 4, **caractérisé en ce que** le chargement est effectué sous pression.

6. Procédé selon la revendication 4 ou 5, **caractérisé en ce que** le matériau de support se détend dans l'outil.

7. Procédé selon l'une quelconque des revendications précédentes, **caractérisé en ce que** l'on choisit comme point d'injection un point aussi éloigné que possible de la feuille.
